# EUROPÄISCHE PATENTSCHRIFT

(11) **EP 0 825 047 B1**
(45) Veröffentlichungstag und Bekanntmachung des Hinweises auf die Patenterteilung: **17.10.2001**
(21) Anmeldenummer: 97113961.3
(22) Anmeldetag: 13.08.1997
(51) Int. Cl.: B60J 7/06

(54) **Längsträger für zusammenschiebbare Verdecke für Fahrzeugaufbauten**
Support beam for retractable cover for superstructure of load carrying vehicle
Longeron de support pour une bâche repliable et coulissante pour caisse de véhicule utilitaire

(30) Priorität: 17.08.1996 DE 19633227
(43) Veröffentlichungstag der Anmeldung: 25.02.1998
(73) Patentinhaber: Edscha LKW-Schiebeverdecke GmbH, 42855 Remscheid (DE)
(72) Erfinder: Bremicker, Eduard, 42855 Remscheid (DE)
(74) Vertreter: Sparing, Rolf Klaus

(56) Entgegenhaltungen:
- EP-A- 0 459 879
- DE-A- 4 421 280

## Beschreibung

Die Erfindung bezieht sich auf einen Längsträger für zusammenschiebbare Planenverdecke von Fahrzeugaufbauten, welcher als über aufragende Stützen gegen die Ladepritsche abgestützter Längsgurt zur Halterung und Führung verschieblicher und beidendig mit Rollenwagen ausgestatteter Spriegel und Rungen in den oberen seitlichen Bereichen eines Fahrzeugaufbaues eingesetzt und über die Fahrzeuglänge hin in eine Anzahl untereinander verbindbarer Längenabschnitte unterteilt ist, und welcher aus einem einteiligen Profilmaterial besteht, welches eine Anzahl von Profilstegen zur Bildung von im wesentlichen U-förmigen Lauf- und/oder Führungsschienen sowie Aufhängungen für Schieberungen aufweist, wobei insgesamt drei U-förmige Lauf-und/oder Führzungsschienen an der oberen Seite des Profiles derart angeordnet sind, daß deren eine einer um eine vertikale Achse rotierenden Führungsrolle zugeordnet und in der oberen Profilquerwandung und deren beide anderen jeweils einer von zwei um eine horizontale Achse rotierenden Laufrolle zugeordnet und in den Profilseitenwandungen ausgebildet sind und wobei die Aufhängungen für Schieberungen an der unteren Profilseite angeordnet sind.

Ein als Strangpressprofil, insbesondere aus einem Leichtmetallwerkstoff ausgebildeter Längsträger dieser Bauart ist für zusammenschiebbare Planenverdecke von Fahrzeugaufbauten aus der gattungsgemäßen DE-OS 44 21 280 bekannt geworden. Dieser bekannte Längsträger zeichnet sich in besonderer Weise durch eine im wesentlichen in eine rechteckige Profilquerschnittsform integrierte Ausbildung einerseits einer Gruppe von drei U-förmigen Lauf-und Führungsschienen für die Abstützung und Führung von Rollenwagen und andererseits nebeneinanderliegende Aufnahmen für Rollengleiter für die Aufhängung von Schieberungen und starren Seitenwandungsteilen des Fahrzeugaufbaues aus. Dabei sind an diemit einer um eine vertikale Achse rotierende Führungsrolle und zwei um eine horizntale Achse rotierende Laufrollen ausgestatteten Rollenwagen die Spriegel angeschlossen, welche eine lediglich den Dachbereich des Verdeckes übergreifende Plane abstützen. Insbesondere sind bei dem bekannten Längsträger die Gruppe von drei U-förmigen Lauf-und Führungsschienen und die Aufnahmen für Rollengleiter unmittelbar übereinanderliegend angeordnet. Eine solche Profilausbildung der Längsträger eine Fahzeugaufbaues ist grundsätzlich mit dem Nachteil behaftet, daß sie für eine über die Ladepritschenlänge des Fahrzeuges hin in mehrere Längenabschnitte unterteilte Ausführung des Längsträgers ungeeignet ist. Ferner zeichnet sich die bekannte Ausgestaltung eines Längsträgers dadurch aus, daß sie nur für solche Verdecke bzw. Aufbauten geeignet ist, welche aus starre Abschnitte bildenden Seitenwandungen und durch eine Plane gebildete Überdeckung des Dachbereiches gebildet sind. Andererseits sind aus zwei Profilen zusammengesetzte Längsträger, wie sie an sich beispielsweise aus der EP-OS 0 459 879 bekannt sind, für eine über die Ladepritschenlänge des Fahrzeuges hin in mehrere Längenabschnitte unterteilte Ausführung des Längsträgers zwar besser geeignet, jedoch mit dem Nachteil eines erheblichen Herstellungs-und Montageaufwandes behaftet.

Der Erfindung liegt die Aufgabe zugrunde einen Längsträger für zusammenschiebbare Planenverdecke von Fahrzeugaufbauten dahingehend zu verbessern, daß er bei insgesamt geringstmöglichem Gewicht und einer Herstellbarkeit als einteiliges fortlaufendes Profilmaterial für mit einer Vollplane ausgestattete Fahrzeugaufbauten und insbesondere für über die Fahrzeugaufbaulänge hin in Abschnitte unterteilte Längsträgeranordnungen geeignet ist, wobei neben einer hinreichenden Eigensteifigkeit des Profiles insbesondere ein ebenso stabiles wie leicht ausführbares gegenseitiges Verbinden aufeinanderfolgend anzuordnender Längenabschnitte des Längsträgers gewährleistet sein soll.

Diese Aufgabe wird ausgehend von einem Längsträger der eingangs bezeichneten Bauart dadurch gelöst, daß das den Längsträger bildende einteilig hergestellte Profil einen durch ein geschlossenes, tragendes Hohlprofil gebildeten Bereich, einen eine Gruppe von drei Lauf-und Führungsschienen bildenden Bereich und einen wenigstens eine Schiebebahn für Schieberungen enthaltenden Bereich umfaßt, wobei der eine Gruppe von Lauf-und Führungsschienen bildende Bereich und der eine Schiebebahn für Schieberungen enthaltende Bereich in horizontaler Richtung nebeneinander und in vertikaler Richtung übereinander liegend angeordnet sind, und wobei die den um eine horizontale Achse rotierenden Laufrollen eines Rollenwagens zugeordneten Lauf-oder Aufstandsbahnen in den Laufschienen von der Profilaußen- zur Profilinnenseite hin von oben nach unten versetzt angeordnet sind.

Aus einer solchen Profilbereichsaufteilung und Profilbereichsanordnung resultiert zunächst der Vorteil eines auf ein Minimum reduzierten Materialverbrauches und damit zugleich eines auf ein Minimum reduzierten Gesamtgewichtes des Fahrzeugaufbaues und zwar unbeschadet einer Anpassung der Profilform an einen mit einer Vollplane ausgestatteten Fahrzeugaufbau und gleichermaßen unbeschadet einer ebenso stabilen wie leicht ausführbaren gegenseitigen Verbindung aufeinanderfolgend anzuordnender Längenabschnitte des Längsträgers. Zugleich wird selbst bei geringer Gesamthöhe des Profiles auch eine in sich verwindungssteife und tragfähige Ausbildung eines durch Strangpressprofilabschnitte gebildeten Längsträgers erreicht. Aus dem gegenseitigen Versatz der verschiedenen Profilbereiche ergibt sich insbesondere einerseits eine Möglichkeit an diesen lösbare Verrigelungsmittel für die zwischen aufeinanderfolgenden Längsträgerabschnitten erforderlichen Verbindungsteile leicht zugänglich anzuordnen bzw. anzuschließen uns andererseits eine Kantenabstützung für eine Vollplane auszubilden, ohne daß hierdurch Beengungen in Kauf genommen werden müssen.

Im Einzelnen ist dabei vorgesehen, daß die nach oben offene Führungsschiene für die um eine vertikale Achse rotierende Führungsrolle eines Rollenwagens durch die Außenflächen von in Verlängerung der beiden vertikalen Seitenwandungen des geschlossenen, tragenden Hohlprofiles ausgebildeten L-förmigen Profilstegen gebildet ist und daß ferner von den Abwinkelungen der beiden in Verlängerung der vertikalen Seitenwandungen des geschlossenen, tragenden Hohlprofiles ausgebildeten L-förmigen Profilstege die der zur Aufbauaußenseite hin offenen Laufschiene zugeordnete eine Laufbahn für die außenliegende der um eine horizontale Achse rotierenden Laufrollen eines Rollenwagens bildet.

Zweckmäßigerweise ist bei einer solchen Profilgestaltung dann weiter vorgesehen, daß die Lauf-oder Aufstandsbahn der zur Aufbauinnenseite hin offenen, der innenliegenden Laufrolle eines Rollenwagens zugeordneten Laufschiene durch einen an die entsprechende Seitenwandung des geschlossenen, tragenden Hohlprofiles angeschlossenen geraden Profilsteg gebildet ist.

In weiterer Ausgestaltung der Profilform eines aus einem Strangpressprofil bestehenden Längsträgers für zusammenschiebbare Planenverdecke von Fahrzeugaufbauten ist vorgesehen, daß der eine Schiebebahn für Schieberungen enthaltende Bereich des Längsträgerprofiles vermittels eines an der zur Aufbauaußenseite hin gelegenen vertikalen Seitenwandung des geschlossenen, tragenden Hohlprofiles ausgeformten, im Wesentlichen horizontalen Profilsteges an das tragende Hohlprofil angeschlossen ist, wobei die Schiebebahn für die Schieberungen zweckmäßigerweise wenigstens zur Aufbauaußenseite hin durch einen im wesentlichen vertikal gerichteten und an den am geschlossenen, tragenden Hohlprofil ausgeformten, im wesentlichen horizontalen Profilsteg angeschlossenen weiteren Profilsteg gebildet ist.

Insbesondere für mit einer Vollplane, d.h. mit einer nicht nur die Dachfläche sondern zugleich auch die Seitenwandungen des Aufbaues übergreifenden Plane ausgestattete Fahrzeugaufbauten zeichnet sich eine Weiterbildung des erfindungsgemäßen Längsträgerprofiles dadurch aus, daß das Längsträgerprofil an seiner zur Aufbauaußenseite hin gerichteten Längsseite eine aufragende, bis in die Dachebene reichende, als Auflage bzw. Abstützung für eine als Vollplane ausgebildete Verdeckplane ausgebildete Abschlußkante aufweist, wobei zweckmäßigerweise zudem vorgesehen ist, daß die als aufragende, bis in die Dachebene reichende, als Auflage bzw. Abstützung für die durch eine Vollplane gebildete Verdeckplane ausgebildete Abschlußkante als Profil-Hohlkammer ausgebildet und an ihrer Oberseite mit einer bogenförmigen Abrundung versehen ist.

Um eine angesichts der beabsichtigten Ausgestaltung eines Längsträgerprofiles optimal gestaltete Profilaußenseite zu erreichen ist es zweckmäßig, daß die außenliegende Seitenwandung der die Auflage bzw. Abstützung für die durch eine Vollplane gebildete Verdeckplane bildenden Abschlußkante und der die Schiebebahn für die Schieberungen zur Aufbauaußenseite hin begrenzende Profilsteg eine glattflächige Profilaußenwandung bilden.

Ausgehend von der Tatsache, daß sich in zumindest teilweise nach oben offenen Profilrinnen von Längsträgern von zusammenschiebbaren Verdecken im Verlaufe bereits kurzer Zeiträume Schmutz-und Abriebansammlungen festsetzen und zu einer zunehmenden Schwergängigkeit des Verdeckes führen ist nach einem weiteren Merkmal der Erfindung vorgesehen, daß der den eine Schiebebahn für Schieberungen enthaltenden Bereich des Längsträgerprofiles mit dem geschlossenem, tragenden Hohlprofil verbindende, im Wesentlichen horizontal gerichtete Profilsteg über einen Teilbereich seiner Länge hin mit seiner Oberseite die untere Begrenzung der die der zur Aufbauaußenseite hin offenen Laufschiene bildet und an diesen Längenabschnitt anschließend mit einer nach unten gerichteten, eine Abrieb-und Schmutzsammelrinne bildenden Auskragung versehen ist.

Die obere Längsgurte eines Fahrzeugaufbaues bildenden Längsträger sollten in untereinander lösbar verbundene Längenabschnitte aufgeteilt werden, um verschiedenen Beladungsbedingungen des Fahrzeuges, insbesondere einer Beladung des Fahrzeuges von oben her Rechnung zu tragen. Dabei kommt es für die Praxis insbesondere darauf an, daß ein Abnehmen und Anbauen von einzelnen Längsträgerabschnitten möglichst rasch und einfach ausführbar ist. In weiterer Vervollkommnung der Erfindung ist daher vorgesehen, daß wenigstens das geschlossene, tragende Hohlprofil des Längsträgerprofiles als Aufnahme für Steckkupplungsteile zur gegenseitigen Verbindung aufeinanderfolgender Längenabschnitte eines unterteilten Längsträgers ausgebildet und wenigstens mit Eingriffsöffnungen für den Steckkupplungsteilen zugeordnete Verriegelungsmittel ausgestattet ist. Die Verriegelungsmittel können dabei zweckmäßigerweise als federbelastete Schnappriegel ausgebildet sein, welche mit einem Riegelzapfen einerseits das Hohlprofil durchgreifen und andererseits in eine zugehörige Ausnehmung im Steckkupplungsteil einrasten.
Eine besonders vorteilhafte Befestigung der Schnappriegel ergibt sich daraus, daß sie mit winkelförmigen Anschlußteilen ausgestattet sind, wobei dem einen Profilschenkel des Anschlußteiles eine rinnenförmige Ausnehmung in der zur Aufbauinnenseite hin gelegenen Profilseitenwandung der Schiebebahn für die Schieberungen zugeordnet ist, während der andere Profilschenkel vermittels einer Befestigungsschraube an einem zur Ausbauinnenseite hin zeigenden, an das tragende Hohlprofil des Längsträgerprofiles angeschlossenen Profilsteg befestigtbar ist.

Ein erfindungsgemäß gestaltete Längsträgerprofil bietet dabei in vorteilhafter Weise die Möglichkeit einer zusätzlichen Versteifung der Längsträgerabschnitte im Bereich ihrer gegenseitigen Stoßstellen in der weise, daß die eine aufragende Auflage bzw. Abstützung für die durch eine Vollplane gebildete Verdeckplane und als Profil-Hohlkammer ausgebildete Abschlußkante derart gestaltet ist, daß sie zur Aufnahme einsetzbarer Versteifungsteile, insbesondere im Stoßbereich zweier benachbarter Längasträgerabschnitte, geeignet ist.

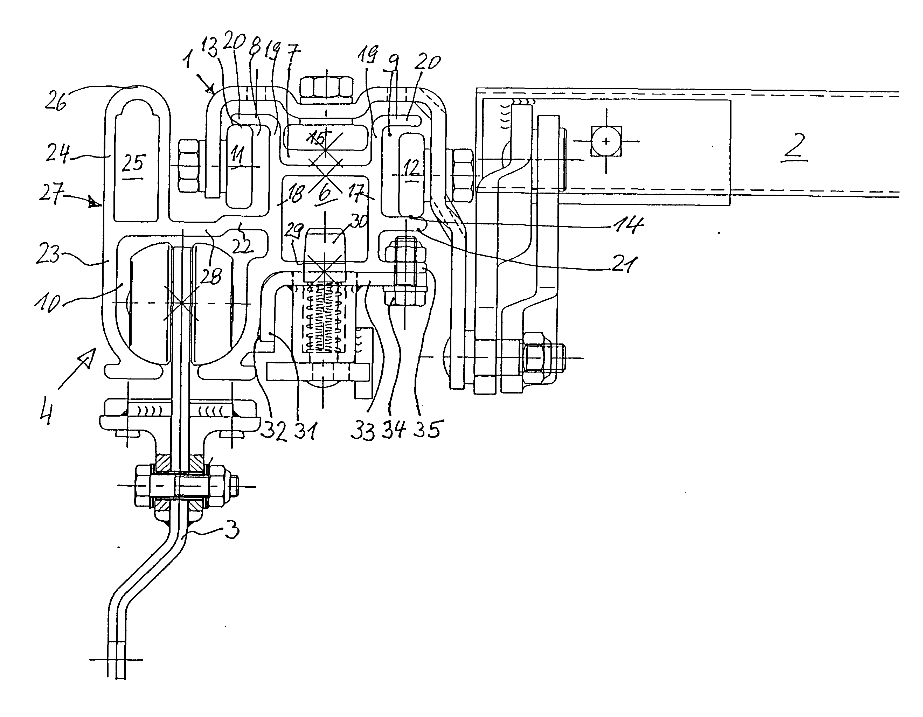

Die Erfindung ist in der nachfolgenden Beispielsbeschreibung anhand eines in der Zeichnung dargestellten Ausführungsbeispieles im Einzelnen beschrieben. In der Zeichnung zeigt die einzige Figur eine Teischnittdarstellung durch ein zusammenschiebbares Planenverdeck.

Ein mit einem in der Zeichnung nicht vollständig gezeigten zusammenschiebbaren Planenverdeck ausgestatteter Fahrzeugaufbau, weist in den beiden oberen seitlichen Bereichen jeweils einen über gleichfalls im Einzelnen nicht dargestellte aufragende Stützen gegen eine Ladepritsche abgestützte Längsgurt zur Halterung und Führung verschieblicher und beidendig mit Rollenwagen 1 ausgestatteter Spriegel 2 sowie verschieblicher Rungen 3 bestimmte Längsträger 4 auf. Die Längsträger 4 sind bei dem in der Zeichnung gezeigten Ausführungsbeispiel über die Fahrzeuglänge hin in eine Anzahl untereinander verbindbarer Längenabschnitte unterteilt. Jeder der beiden Längsträger 4 besteht aus Längenabschnitten eines einteiligen Profilmaterials, insbesondere eines einteiligen Strangpressprofiles, welches aus einem durch ein geschlossenes, tragendes Hohlprofil 6 gebildeten Bereich, einem eine Gruppe von drei im Wesentlichen U-förmigen Lauf-und Führungsschienen 7,8 und 9 für die Rollen der Rollenwagen 1 bildenden Bereich und einem wenigstens eine Schiebebahn 10 für Schieberungen 3 enthaltenden Bereich besteht, wobei der eine Gruppe von Lauf-und Führungsschienen 7,8 und 9 bildende Bereich und der eine Schiebebahn 10 für Schieberungen 3 enthaltende Bereich in horizontaler Richtung zueinander seitlich versetzt nebeneinander und in vertikaler Richtung übereinander liegend angeordnet sind. Die Gruppe der Lauf-und Führungsschienen umfaßt eine nach oben offene Führungsschiene 7 und zwei jeweils seitlich offene Laufschienen 8 und 9, wobei die den beiden Laufrollen 11 und 12 des Rollenwagens 1 zugeordneten Aufstandsbahnen 13 und 14 in den Laufschienen 8 und 9 von der Profilaußen zur Profilinnenseite hin von oben nach unten versetzt angeordnet sind. Die nach oben offene Führungsschiene 7 für die um eine vertikale Achse rotierende Führungsrolle 15 eines Rollenwagens 1 ist durch die Außenflächen 16 von in Verlängerung der beiden vertikalen Seitenwandungen 17 und 18 des geschlossenen, tragenden Hohlprofiles 6 ausgebildeten L-förmigen Profilstegen 19 gebildet, wobei von den Abwinkelungen 20 der beiden in Verlängerung der vertikalen Seitenwandungen 17 und 18 des geschlossenen, tragenden Hohlprofiles 6 ausgebildeten L-förmigen Profilstege 19 die der zur Aufbauaußenseite hin offenen Laufschiene 8 zugeordnete eine Laufbahn 13 für die außenliegende 11 der um eine horizontale Achse rotierenden Laufrollen 11 und 12 eines Rollenwagens 1 bildet. Die Lauf-oder Aufstandsbahn 14 der zur Aufbauinnenseite hin offenen, der innenliegenden Laufrolle 12 des Rollenwagens 1 zugeordneten Laufschiene 9 ist durch einen an die entsprechende Seitenwandung 18 des geschlossenen, tragenden Hohlprofiles 6 angeschlossenen geraden Profilsteg 21 gebildet. Der eine Schiebebahn 10 für Schieberungen 3 enthaltende Bereich des Längsträgerprofiles ist vermittels eines an der zur Aufbauaußenseite hin gelegenen vertikalen Seitenwandung 17 des geschlossenen, tragenden Hohlprofiles 6 ausgeformten, im Wesentlichen horizontalen Profilsteges 22 an das tragende Hohlprofil 6 angeschlossen, wobei die im Profilquerschnitt unterseitig etwa halbrunde und nach unten schlitzförmig geöffnete Schiebebahn 10 für die Schieberungen 3 zur Aufbauaußenseite hin durch einen im wesentlichen vertikal gerichteten und an den am geschlossenen, tragenden Hohlprofil 6 ausgeformten, im wesentlichen horizontalen Profilsteg 22 angeschlossenen weiteren Profilsteg 23 gebildet ist. In besonderer Anpassung an mit einer Vollplane ausgestattete Fahrzeugaufbauten ist das Längsträgerprofil darüber hinaus an seiner zur Aufbauaußenseite hin gerichteten Längsseite mit einer aufragenden, bis in die Dachebene reichenden und als Auflage bzw. Abstützung für die Vollplane ausgebildeten Abschlußkante 24 versehen, wobei die Abschlußkante bei der gezeigten Ausführungsform eines Längsträgerprofiles als Profil-Hohlkammer 25 ausgebildet und an ihrer Oberseite mit einer bogenförmigen Abrundung 26 versehen ist. Eine optimal gespaltete Profilaußenseite des Längsträgerprofiles ist bei der gezeigten Ausführungsform dadurch erreicht, daß die außenliegende Seitenwandung 27 der die Auflage bzw. Abstützung für eine Vollplane bildende Abschlußkante 24 und der die Schiebebahn 10 für Schieberungen 3 zur Aufbauaußenseite hin begrenzende Profilsteg 23 eine glattflächige Profilaußenwandung bilden. Um ein Ansammeln von Schmutz-und Abrieb in der zur Aufbauaußenseite hin offenen Laufschiene 8 ist der an der zur Aufbauaußenseite hin gelegenen vertikalen Seitenwandung 17 des geschlossenen, tragenden Hohlprofiles 6 ausgeformte und die Schiebebahn 10 für Schieberungen 3 mit dem Hohlprofil 6 verbindende, im Wesentlichen horizontale Profilsteg 22, welcher mit seiner Oberseite über einen Teilbereich seiner Länge hin zugleich die untere Begrenzung der die der zur Aufbauaußenseite hin offenen Laufschiene 8 bildet, mit einer nach unten gerichteten, eine Abrieb-und Schmutzsammelrinne bildenden Auskragung 28 versehen. Die die oberen Längsgurte des Fahrzeugaufbaues bildenden Längsträger sind in der gezeigten Ausführungsform in untereinander lösbar verbundene Längenabschnitte aufgeteilt, wobei ein möglichst rasch und einfach ausführbares Abnehmen und Anbauen der einzelnen Längsträgerabschnitte dadurch gewährleistet ist, daß das geschlossene, tragende Hohlprofil 6 des Längsträgerprofiles als Aufnahme für in der Zeichnung nicht gezeigte aber übliche Steckkupplungsteile zur gegenseitigen Verbindung aufeinanderfolgender Längenabschnitte eines unterteilten Längsträgers ausgebildet und wenigstens mit Eingriffsöffnungen 29 für den Steckkupplungsteilen zugeordnete, als federbelastete Schnappriegel 30 ausgebildete Verriegelungsmittel ausgestattet ist. Die Verriegelungsmittel können dabei im Hohlprofil 6 vorgesehene Ausnehmungen durchgreifen und in zugehörige Rastausnehmung im Steckkupplungsteil einrasten. zu ihrer Befestigung sind die Schnappriegel 30 mit winkelförmigen Anschlußteilen ausgestattet, wobei dem einen Profilschenkel 31 des Anschlußteiles eine rinnenförmige Ausnehmung 32 in der zur Aufbauinnenseite hin gelegenen Profilseitenwandung der Schiebebahn 10 für die Schieberungen zugeordnet ist, während der andere Profilschenkel 33 vermittels einer Befestigungsschraube 34 an einem zur Ausbauinnenseite hin zeigenden, an das tragende Hohlprofil 6 des Längsträgerprofiles angeschlossenen Profilsteg 35 befestigtbar ist.

Ein zusätzlichen Versteifung der Längsträgerabschnitte im Bereich ihrer gegenseitigen Stoßstellen kann in der Weise gebildet werden, daß die eine aufragende Auflage bzw. Abstützung für die Vollplane und als Profil-Hohlkammer ausgebildete Abschlußkante 24 zur Aufnahme einsetzbarer Versteifungsteile geeignet ausgebildet ist.

## Patentansprüche

1. Längsträger (4) für zusammenschiebbare Planenverdecke von Fahrzeugaufbauten, welcher als über aufragende Stützen gegen die Ladepritsche abgestützter Längsgurt zur Halterung und Führung verschieblicher und beidendig mit Rollenwagen (1) ausgestatteter Spriegel (2) und Rungen (3) in den oberen seitlichen Bereichen eines Fahrzeugaufbaues eingesetzt und über die Fahrzeuglänge hin in eine Anzahl untereinander verbindbarer Längenabschnitte unterteilt ist, und welcher aus einem einteiligen Profilmaterial besteht, welches eine Anzahl von Profilstegen (19,22,23) zur Bildung von im wesentlichen U-förmigen Lauf- und/oder Führungsschienen (7,8,9) sowie Aufhängungen für Schieberungen (3) aufweist, wobei insgesamt drei U-förmige Lauf-und/oder Führzungsschienen (7,8,9) an der oberen Seite des Profiles derart angeordnet sind, daß deren eine einer um eine vertikale Achse rotierenden Führungsrolle (15) zugeordnet und in der oberen Profilquerwandung und deren beide anderen jeweils einer von zwei um eine horizontale Achse rotierenden Laufrolle (11,12) zugeordnet und in den Profilseitenwandungen ausgebildet sind und wobei die Aufhängungen für Schieberungen (3) an der unteren Profilseite angeordnet sind,
**dadurch gekennzeichnet,**
**daß** das den Längsträger (4) bildende einteilig hergestellte Profil einen durch ein geschlossenes, tragendes Hohlprofil gebildeten Bereich, einen eine Gruppe von drei Lauf-und Führungsschienen (7,8,9) bildenden Bereich und einen wenigstens eine Schiebebahn (10) für Schieberungen (3) enthalten den Bereich umfaßt, wobei der eine Gruppe von Lauf-und Führungsschienen (7,8,9) bildende Bereich und der eine Schiebebahn (10) für Schieberungen enthaltende Bereich in horizontaler Richtung nebeneinander und in vertikaler Richtung übereinander liegend angeordnet sind, und wobei die den um eine horizontale Achse rotierenden Laufrollen (11,12) eines Rollenwagens (1) zugeordneten Lauf-oder Aufstandsbahnen in den Laufschienen von der Profilaußen- zur Profilinnenseite hin von oben nach unten versetzt angeordnet sind.

2. Längsträger nach Anspruch 1, **dadurch gekennzeichnet, daß** die nach oben offene Führungsschiene (7) für die um eine vertikale Achse rotierende Führungsrolle (15) eines Rollenwagens (1) durch die Außenflächen (16) von in Verlängerung der beiden vertikalen Seitenwandungen (17,18) des geschlossenen, tragenden Hohlprofiles (6) ausgebildeten L-förmigen Profilstegen (19) gebildet ist.

3. Längsträger nach Anspruch 1 oder 2, **dadurch gekennzeichnet, daß** von den Abwinkelungen (20) der beiden in Verlängerung der vertikalen Seitenwandungen (17,18) des geschlossenen, tragenden Hohlprofiles (6) ausgebildeten L-förmigen Profilstege (19) die der zur Aufbauaußenseite hin offenen Laufschiene (8) zugeordnete eine Laufbahn (13) für die außenliegende der um eine horizontale Achse rotierenden Laufrollen (11) eines Rollenwagens (1) bildet.

4. Längsträger nach einem der Ansprüche 1 bis 3, **dadurch gekennzeichnet, daß** die Lauf-oder Aufstandsbahn (14) der zur Aufbauinnenseite hin offenen, der innenliegenden Laufrolle (12) eines Rollenwagens (1) zu geordneten Laufschiene (9) durch einen an die entsprechende Seitenwandung (18) des geschlossenen, tragenden Hohlprofiles (6) angeschlossenen geraden Profilsteg (21) gebildet ist.

5. Längsträger nach einem der Ansprüche 1 bis 4, **dadurch gekennzeichnet, daß** der eine Schiebebahn (10) für Schieberungen (3) enthaltende Bereich des Längsträgerprofiles vermittels eines an der zur Aufbauaußenseite hin gelegenen vertikalen Seitenwandung (17) des geschlossenen, tragenden Hohlprofiles (6) ausgeformten, im Wesentlichen horizontalen Profilsteges (22) an das tragende Hohlprofil (6) angeschlossen ist.

6. Längsträger nach einem der Ansprüche 1 bis 5, **dadurch gekennzeichnet, daß** die Schiebebahn (10) für die Schieberungen (3) wenigstens zur Aufbauaußenseite hin durch einen im wesentlichen vertikal gerichteten und an den am geschlossenen, tragenden Hohlprofil (6) ausgeformten, im wesentlichen horizontalen Profilsteg (22) angeschlossenen weiteren Profilsteg (23) gebildet ist.

7. Längsträger nach einem der Ansprüche 1 bis 6, **dadurch gekennzeichnet, daß** das Längsträgerprofil an seiner zur Aufbauaußenseite hin gerichteten Längsseite eine aufragende, bis in die Dachebene reichende, als Auflage bzw. Abstützung für eine als Vollplane ausgebildete Verdeckplane ausgebildete Abschlußkante (24) aufweist.

8. Längsträger nach Anspruch 7, **dadurch gekennzeichnet, daß** die als aufragende, bis in die Dachebene reichende, als Auflage bzw. Abstützung für die durch eine Vollplane gebildete Verdeckplane ausgebildete Abschlußkante (24) als Profil-Hohlkammer (25) ausgebildet und an ihrer Oberseite mit einer bogenförmigen Abrundung (26) versehen ist.

9. Längsträger nach Anspruch 7 oder 8, **dadurch gekennzeichnet, daß** die auβenliegende Seitenwandung (27) der die Auflage bzw. Abstützung für die durch eine Vollplane gebildete Verdeckplane bildenden Abschlußkante (24) und der die Schiebebahn (10) für die Schieberungen (3) zur Aufbauaußenseite hin begrenzende Profilsteg (23) eine glattflächige Profilaußenwandung bilden.

10. Längsträger nach einem der Ansprüche 1 bis 9, **dadurch gekennzeichnet, daß** der den eine Schiebebahn (10) für Schieberungen (3) enthaltenden Bereich des Längsträgerprofiles mit dem geschlossenem, tragenden Hohlprofil (6) verbindende, im Wesentlichen horizontal gerichtete Profilsteg (22) über einen Teilbereich seiner Länge hin mit seiner Oberseite die untere Begrenzung der die der zur Aufbauaußenseite hin offenen Laufschiene (8) bildet und an diesen Längenabschnitt anschließend mit einer nach unten gerichteten, eine Abrieb-und Schmutzsammelrinne bildenden Auskragung (28) versehen ist.

11. Längsträger nach einem der Ansprüche 1 bis 10, **dadurch gekennzeichnet, daß** wenigstens das geschlossene, tragende Hohlprofil (6) des Längsträgerprofiles als Aufnahme für Steckkupplungsteile zur gegenseitigen Verbindung aufeinanderfolgender Längenabschnitte eines unterteilten Längsträgers ausgebildet und wenigstens mit Eingriffsöffnungen (29) für den Steckkupplungsteilen zugeordnete Verriegelungsmittel ausgestattet ist.

12. Längsträger nach einem der Ansprüche 7 bis 11, **dadurch gekennzeichnet, daß** die eine aufragende Auflage bzw. Abstützung für die durch eine Vollplane gebildete Verdeckplane und als Profil-Hohlkammer (25) ausgebildete Abschlußkante (24) derart gestaltet ist, daß sie zur Aufnahme einsetzbarer Versteifungsteile, insbesondere im Stoßbereich zweier benachbarter Längasträgerabschnitte, geeignet ist.

## Claims

1. Longitudinal carrier (4) for telescopic tarpaulin covers of upper vehicle bodies which is used as a longitudinal belt supported via projecting supports against the loading platform for holding and guiding bows (2) and stakes (3), which are displaceable and equipped at the two ends with roller carriages (1), in the upper lateral regions of an upper vehicle body and is divided over the length of the vehicle into a number of longitudinal portions which can be connected to one another, and is composed of a one-piece profile material which comprises a number of profile webs (19, 22, 23) for forming substantially U-shaped runners and/or guide rails (7, 8, 9) and mountings for slide stakes (3), wherein in total three U-shaped runners and/or guide rails (7, 8, 9) are arranged on the upper side of the profile in such a way that one of them is associated with a guide roller (15) rotating about a vertical axis and in the upper profile transverse wall, and the other two of which are, in each case, associated with one of two track rollers (11, 12) rotating about a horizontal axis and are formed in the profile lateral walls, and wherein the mounts for the slide stakes (3) are arranged on the lower profile side, **characterised in that** the profile produced in one piece and forming the longitudinal carrier (4) comprises a region formed by a closed, bearing hollow profile, a region forming a group of three runners and guide rails (7, 8, 9) and a region containing at least a slide track (10) for slide stakes (3) wherein the region containing a group of runners and guide rails (7, 8, 9) and the region containing a slide track (10) for slide stakes are arranged adjacent to one another in the horizontal direction and above one another in the vertical direction, and wherein the running or contact tracks associated with the track rollers (11, 12) of a roller carriage (1) rotating about a horizontal axis in the runners are arranged offset from top to bottom from the outer side of the profile toward the inner side of the profile.

2. Longitudinal carrier according to claim 1, **characterised in that** the guide rail (7) open at the top for the guide roller (15) of a roller carriage (1) rotating about a vertical axis is formed by the outer faces (16) of L-shaped profile webs (19) formed as an extension of the two vertical lateral walls (17, 18) of the closed, bearing hollow profile (6).

3. Longitudinal carrier according to claim 1 or 2, **characterised in that** the one running track (13), associated with the runner (8) open towards the outer contact side, for the outer track rollers (11) rotating about a horizontal axis, of a roller carriage (1), forms L-shaped profile webs (19) formed from the bent-off parts (20) in extension of the two vertical lateral walls (17, 18) of the closed, bearing hollow profile (6).

4. Longitudinal carrier according to one of claims 1 to 3, **characterised in that** the running or contact track (14) of the runner (9), open to the inner contact side and associated with the inner track roller (12) of a roller carriage (1), is formed by a straight profile web (21) attached to the corresponding lateral wall (18) of the closed, bearing hollow profile (6).

5. Longitudinal carrier according to one of claims 1 to 4, **characterised in that** the region containing a slide track (10) for slide stakes (3) of the longitudinal carrier profile is connected to the bearing hollow profile (6) by means of a vertical lateral wall (17) located towards the outer contact side of the substantially horizontal profile web (22) formed on the closed, bearing hollow profile (6).

6. Longitudinal carrier according to one of claims 1 to 5, **characterised in that** the slide track (10) for the slide stakes (3), at least towards the outer contact side, is formed by a further profile web (23) which is directed substantially vertically and is connected to the substantially horizontal profile web (22) formed on the closed, bearing hollow profile (6).

7. Longitudinal carrier according to one of claims 1 to 6, **characterised in that** the longitudinal carrier profile comprises, at its longitudinal side directed towards its outer contact side, a projecting border (24) extending into the roof plane, as rest or support for a covering tarpaulin formed as a complete tarpaulin.

8. Longitudinal carrier according to claim 7, **characterised in that** the border (24) designed as a projecting rest or support, extending into the roof plane, for the covering tarpaulin formed by a complete tarpaulin is designed as a profile hollow chamber (25) and is provided with a bow-shaped rounded area (26) on its top side.

9. Longitudinal carrier according to claim 7 or 8, **characterised in that** the outer lateral wall (27) of the rest or support for the border (24) forming a covering tarpaulin formed by a complete tarpaulin and the profile web (23) bordering the slide track (10) for the slide stakes (3) towards the outer contact side form a smooth outer profile wall.

10. Longitudinal carrier according to one of claims 1 to 9, **characterised in that** the profile web (22), directed substantially horizontally and connecting the region of the longitudinal carrier profile containing a slide track (10) for slide stakes (3) to the closed, bearing hollow profile (6) via a partial region of its length, with its topside, forms the lower limit of the runner (8) open towards the outer contact side and is provided with an overhang (28) directed downwards and forming a scuff and soil collecting channel adjacent to this longitudinal portion.

11. Longitudinal carrier according to one of claims 1 to 10, **characterised in that** at least the closed, bearing hollow profile (6) of the longitudinal carrier profile is designed as a receiver for plug coupling parts for mutually connecting successive longitudinal portions of a divided longitudinal carrier and is equipped at least with engagement apertures (29) for locking means associated with the plug coupling parts.

12. Longitudinal carrier according to one of claims 7 to 11, **characterised in that** the border (24) forming a projecting rest or support for the covering tarpaulin formed as a complete tarpaulin and designed as a profile hollow chamber (25) is formed in such a way that it is suitable for receiving insertable reinforcing parts, in particular in the impact region of two neighbouring longitudinal carrier portions.

## Revendications

1. Longeron de support **(4)** pour une bâche repliable et coulissante pour caisse de véhicule utilitaire, qui est utilisé comme ceinture longitudinale appuyée contre le plateau par l'intermédiaire d'étais en saillie pour tenir et guider des arceaux **(2)** et des ranches **(3)** mobiles et équipés aux deux extrémités de chariots roulants **(1)** dans les parties latérales supérieures d'une caisse de véhicule utilitaire et qui est subdivisée en une pluralité de segments de longueur pouvant être reliés entre eux sur la longueur du véhicule, et qui est composé d'un matériau profilé d'un seul tenant, lequel présente une pluralité de barres de profilé **(19, 22, 23)** pour former des rails de déplacement et/ou de guidage **(7, 8, 9)** sensiblement en U, ainsi que des suspensions pour des ranches de poussée **(3),** au total trois rails de déplacement et/ou de guidage **(7, 8, 9)** en U étant placés de telle manière sur la face supérieure du profilé que l'un d'eux est associé à un rouleau de guidage **(15)** tournant autour d'un axe vertical et est formé dans la paroi transversale de profilé supérieure et les deux autres sont associés chacun à l'un de deux rouleaux de déplacement **(11, 12)** tournant autour d'un axe horizontal et sont formés dans la paroi latérale de profilé, et les suspensions pour ranches de poussée **(3)** étant placées sur la face inférieure du profilé,
**caractérisé en ce que** le profilé fabriqué d'un seul tenant et formant le longeron de support **(4)** enserre une zone formée par un profilé creux porteur fermé, une zone formant un groupe de trois rails de déplacement et de guidage **(7, 8, 9)** et une zone contenant au moins une voie de déplacement **(10)** pour des ranches de poussée **(3),** le premier groupe de rails de déplacement et de guidage (**7, 8, 9**) et la zone contenant une voie de déplacement **(10)** pour des ranches de poussée étant placés l'un à côté de l'autre et l'un au-dessus de l'autre dans la direction verticale, et les voies de déplacement ou de levage des rails de déplacement associées aux rouleaux de déplacement **(11, 12)** d'un chariot roulant **(1)** tournant autour d'un axe horizontal étant placées décalées de haut en bas en allant de la face extérieure du profilé à la face intérieure du profilé.

2. Longeron de support selon la revendication 1, **caractérisé en ce que** le rail de guidage **(7)** ouvert vers le haut pour le rouleau de guidage **(15)** d'un chariot roulant **(1)** tournant autour d'un axe vertical est formé par les surfaces extérieures **(16)** de barres de profilé **(19)** en L formées dans le prolongement des deux parois latérales verticales **(17,18)** du profilé creux porteur fermé **(6)**.

3. Longeron de support selon la revendication 1 ou 2, **caractérisé en ce que**, parmi les coudes **(20)** des deux barres de profilé **(19)** en L formées dans le prolongement des parois latérales verticales **(17,18)** du profilé creux porteur fermé **(6),** celle qui est associée au rail de déplacement **(8),** ouvert en direction du côté extérieur de la caisse de véhicule, forme une voie de roulement **(13)** pour celui extérieur des rouleaux de déplacement **(11)** d'un chariot roulant **(1)** tournant autour d'un axe horizontal.

4. Longeron de support selon l'une des revendications 1 à 3, **caractérisé en ce que** la voie de déplacement ou de levage **(14)** du rail de déplacement **(9)** ouvert en direction du côté intérieur de la caisse de véhicule et associé au rouleau de déplacement intérieur **(12)** d'un chariot roulant **(1)** est formée par une barre de profilé droite **(21)** raccordée à la paroi latérale **(18)** correspondante du profilé creux porteur fermé **(6).**

5. Longeron de support selon l'une des revendications 1 à 4, **caractérisé en ce que** la zone du profilé du longeron de support contenant une voie de déplacement **(10)** pour des ranches de poussée **(3)** est raccordée au profilé creux porteur **(6)** au moyen d'une barre de profilé sensiblement horizontale **(22)** formée sur la paroi latérale verticale **(17)** du profilé creux porteur **(6)** fermé tournée vers le côté extérieur de la caisse de véhicule.

6. Longeron de support selon l'une des revendications 1 à 5, **caractérisé en ce que** la voie de déplacement **(10)** pour les ranches de poussée **(3)** est formée au moins en direction du côté extérieur de la caisse de véhicule par une autre barre de profilé **(23)** orientée sensiblement verticalement et raccordée à la barre de profilé sensiblement horizontale **(22)** formée sur le profilé creux porteur fermé **(6)**.

7. Longeron de support selon l'une des revendications 1 à 6, **caractérisé en ce que** le profilé du longeron de support présente sur son côté longitudinal tourné vers le côté extérieur de la caisse de véhicule un bord de terminaison **(24)** en saillie, rejoignant le plan du toit et conformé en support ou appui pour une bâche conformée en bâche pleine.

8. Longeron de support selon la revendication 7, **caractérisé en ce que** le bord de terminaison **(24)** en saillie, rejoignant le plan du toit et conformé en support ou appui pour une bâche formée par une bâche pleine est conformé en âme de profilé creux **(25)** et est muni sur sa face supérieure d'un arrondi **(26)** en forme d'arc.

9. Longeron de support selon la revendication 7 ou 8, **caractérisé en ce que** la paroi latérale extérieure **(27)** du bord de terminaison **(24)** formant le support ou l'appui pour une bâche formée par une bâche pleine et la barre de profilé **(23)** délimitant la voie de déplacement **(10)** pour les ranches de poussée **(3)** en direction du côté extérieur de la caisse de véhicule forment une paroi extérieure de profilé à surface lisse.

10. Longeron de support selon l'une des revendications 1 à 9, **caractérisé en ce que** la barre de profilé **(22)** orientée sensiblement horizontalement et reliant la zone du longeron de support contenant une voie de déplacement **(10)** pour des ranches de poussée **(3)** au profilé creux porteur fermé **(6)** forme avec sa face supérieure, sur une partie de sa longueur, la limite inférieure du rail de déplacement **(8)** ouvert en direction du côté extérieur de la caisse de véhicule, et est munie à la suite de cette section de longueur d'une console **(28)** dirigée vers le bas, formant une rainure de collecte d'usure et de saleté.

11. Longeron de support selon l'une des revendications 1 à 10, **caractérisé en ce qu'**au moins le profilé creux fermé porteur **(6)** du profilé du longeron de support est conformé en logement pour des parties d'accouplement par encliquetage destinées à une liaison mutuelle de segments de longueur successifs d'un longeron de support subdivisé, et est équipé au moins d'ouvertures de prise **(29)** pour des moyens de verrouillage associés aux parties d'accouplement par encliquetage.

12. Longeron de support selon l'une des revendications 7 à 11, **caractérisé en ce que** le bord de terminaison **(24)** formant un support ou appui en console pour la bâche formée d'une bâche pleine et conformé en âme de profilé creux **(25)** est configuré de telle manière qu'il convient pour recevoir des parties de rigidité insérables, en particulier dans la zone de raccordement entre deux segments voisins du longeron de support.
